# EUROPEAN PATENT SPECIFICATION

(11) **EP 0 903 844 B1**
(45) Date of publication and mention of the grant of the patent: **08.12.2004**
(21) Application number: 98201212.2
(22) Date of filing: 14.04.1998
(51) Int. Cl.: H02P 1/00, H02P 6/06, H02P 5/168, B41J 19/78

(54) **Drive system**
Antriebssystem
Système d'entrainement

(30) Priority: 23.09.1997 EP 97202947
(43) Date of publication of application: 24.03.1999
(73) Proprietor: AGFA-GEVAERT, 2640 Mortsel (BE)
(72) Inventor: Godon, Fernand, 2640 Morstel (BE); Horemans, Luc, 2640 Morstel (BE); Zwijsen, Jan, 2640 Morstel (BE)

(56) References cited:
- EP-A- 0 377 835
- EP-A- 0 680 829
- EP-A- 0 724 964
- DE-A- 4 211 982
- US-A- 4 407 003
- PATENT ABSTRACTS OF JAPAN vol. 007, no. 112 (M-215), 17 May 1983 & JP 58 033484 A (FUJITSU KK), 26 February 1983

## Description

### FIELD OF THE INVENTION

The present invention relates to a drive system, to drive a load by means of a motor, in particular a load that is sensitive to shocks.

### BACKGROUND OF THE INVENTION

To drive a rotatable load, it is well known to use a motor and a drive system. The drive system transmits the power supplied by the motor to the load, and transforms the motor torque and speed to the torque and speed required by the load; usually the load requires a higher torque than the one provided by the motor, but at a lower speed. In a number of steps, called transmission steps, the motor power is transmitted to the load, while each transmission step provides a lower speed and at the same time a higher torque. An example of a drive system is the gearbox of a car - or the automatic transmission, in case gear is changed automatically.

Common drive systems comprise mechanical components such as gears, belts, chains, or combinations thereof.

The purpose of a drive system is driving the load at a chosen angular speed, keeping this speed substantially constant, in spite of load variations, and minimizing shocks experienced by the load, i.e. sudden decelerations or accelerations. Shocks can be caused by the motor, e.g. a stepper motor creates accelerations and decelerations; they can be caused by load variations; they can also be introduced by the drive system itself.

A drive system consisting of gear transmissions creates shocks at every engagement and disengagement of the teeth.

By making use of a timing belt, the engagement and the disengagement of the teeth of the belt with its belt pulleys causes minute accelerations and decelerations.

The extent of accelerations and decelerations of course depends on what the load can tolerate. By way of example, hereinafter the drive system of the print drum of a thermal printer will be described. In this case, most accelerations and decelerations of the load, i.e. the print drum, are visible in the image produced by the printer. Whether a shock on the print drum is visible or not in the printed image depends on its amplitude and its frequency.

Thermal imaging or thermography is a recording process wherein images are generated by the use of image-wise modulated thermal energy.

In thermography two approaches are known :
1. Direct thermal formation of a visible image pattern by the image-wise heating of a recording material containing matter that by chemical or physical process changes colour or optical density.
2. Thermal dye transfer printing wherein a visible image pattern is formed by transfer of a coloured species from an image-wise heated donor element into a receptor element.

Common thermal printers comprise a rotatable drum and an elongate thermal head which is spring-biased towards the drum to firmly line-wise contact a heat-sensitive material which is passed between the head and the drum.

The thermal head includes a plurality of heating elements and corresponding drivers and shift registers for these elements. The image-wise heating of a sheet is performed on a line by line basis. The heating resistors are geometrically juxtaposed along each other in a bead-like row running parallel to the axis of the drum. Each of these resistors is capable of being energised by heating pulses, the energy of which is controlled in accordance with the required density of the corresponding picture element.

In direct thermal image formation, a single heat-sensitive sheet is conveyed between the thermal head and the drum, and the image is directly produced on the sheet. The sheet is not attached to the drum but is advanced between the head and the drum by frictional contact of its rearside with the drum.

Medical diagnostics are an application area of direct thermal printing; here an image is produced on a transparent sheet, a polyethylene terephtalate support in particular.

In thermal dye transfer, the sheet - i.e. the image receiving sheet - is usually attached to the rotatable drum, and a dye donor sheet or web is conveyed by frictional contact with the rotating sheet past the thermal head.

In practising the thermal printing technique described hereinbefore, the image quality may be spoiled by a defect which will be called "banding" hereinafter, and which is characterized by transverse zones (i.e. parallel with the thermal head) on the final print of slightly increased and/or reduced optical density which are particularly visible in the areas of lower optical density, say smaller than 1.0.

A known cause for this type of defect is the drive system for the drum. The drive system can cause minute accelerations and decelerations, leading to corresponding reductions and prolongations of the printing time.

In a known prior art system, the print drum is driven by a sequence of timing belts: the motor drives a first intermediate shaft via a first timing belt, this first intermediate shaft drives a second intermediate shaft via a second timing belt, and the second intermediate shaft drives the print drum via a third timing belt. Since the engagement and the disengagement of the teeth of each timing belt with its belt pulleys causes minute accelerations and decelerations, such a drive system contributes significantly to the banding defect.

We have found that severe banding can occur when a substantially white line in the image is followed by a substantially black line. In this case, the resistors in the thermal head very suddenly have to provide a large quantity of thermal energy. When writing the substantially white line, the heat-sensitive material is nearly not heated, while when writing the substantially black line, a large quantity of heat is supplied by the resistors in the thermal head. As a consequence, the thermal head sinks into the heat-sensitive material, thus causing a large increase of the friction force between thermal head and heat-sensitive material. This increase of friction, which will be called "frictional shock" hereinafter, causes an important deceleration of the print drum.

Banding created by the timing belts is an example of shocks caused by the drive system, whereas the frictional shock is an example of a shock caused by a load variation.

Both types of shocks cause defects that are visible in the printed image.

Besides the problem of shocks, a second problem in drive systems is keeping the angular speed of the load substantially constant, in spite of load variations. A stepper motor drives its load at a constant speed; however, as mentioned hereinbefore, a stepper motor creates shocks itself. A DC-motor operates substantially shock-free, but the speed of a DC-motor changes considerably with load variations. A known solution to this problem is to place a rotational encoder on the same shaft as the load. The encoder converts the angular position of the load into a drive signal; this drive signal is used to drive the DC-motor. If the angular speed of the load decreases, less pulses per second are registrated by the encoder, and the drive signal to the motor is adjusted accordingly.

A drawback of this method is the cost of the encoder: to measure the angular position of the load with sufficient accuracy, a high resolution encoder is required, providing a very high number of pulses per revolution of the load.

**EP-A-0 680 829** discloses an optical control system for media handling assemblies in printers, that makes use of a low cost,. low resolution optical encoder which outputs an analog signal with a repeatable cycle indicative of media movement through the printer. An A/D converter converts the analog signal to discrete digital levels that are used by a controller to controllably move the media a selected number of movement increments.

### OBJECTS OF THE INVENTION

It is an object of the present invention to provide a method for driving a load, that substantially guards the load from shocks.

It is a further object of the invention to provide an affordable method for keeping the angular velocity of the load substantially constant.

It is another object of the present invention to provide a drive system, that avoids shocks experienced by the load.

It is a further object of the invention to provide an affordable drive system, that keeps the angular velocity of the load substantially constant.

It is yet another object of the present invention to provide a thermal printer with an improved image quality, in particular with respect to banding.

### SUMMARY OF THE INVENTION

The above mentioned objects are realised by a method, comprising the steps defined in claim 1.

The above mentioned objects are realised by a drive system, having the specific features defined in claim 6.

The above mentioned last object is realised by a thermal printer, having the specific features defined in claim 9.

Specific features for preferred embodiments of the invention are set out in the dependent claims.

Further advantages and embodiments of the present invention will become apparent from the following detailed description and drawings.

The term "coupled" stands for a direct or an indirect interconnection; in an indirect interconnection, the coupled objects are interconnected via other objects. An example of two coupled shafts, called "first" and "second" shaft, is the following: the first shaft supports a first belt pulley, the second shaft supports a second belt pulley, a belt runs over the first and over the second pulley. Another example is the following: the first shaft drives a gear transmission, this gear transmission drives an intermediate shaft via a first belt, the intermediate shaft holds a belt pulley via an elastic coupling, on this belt pulley runs a second belt driving the second shaft.

A timing belt is a belt comprising teeth - as opposed to a flat belt. The belt pulleys of a timing belt also comprise teeth.

A rotational encoder converts a rotational speed into a number of electrical pulses per second, proportional to that speed. To measure the instantaneous speed of a shaft, a rotational encoder can be mounted onto the shaft. Generally, a rotational encoder comprises a disc with alternating black and white marks; when a black mark passes a fixed point in the encoder, a pulse is generated. A high resolution encoder comprises a disc with a high number of marks; it can measure a rotational speed more accurately, but it is also more expensive.

A PDD-controller or proportional derivative double derivative controller generates an output signal, by using one or more input signals, the derivatives of these input signals, and the second derivatives of these input signals. A PDD-controller pertains to the field of control system theory. The best known type of controller is a PID- or proportional integrating derivative controller.

### BRIEF DESCRIPTION OF THE DRAWINGS

The invention is described hereinafter by way of example with reference to the accompanying figures, wherein:
Fig. 1 shows an embodiment of a drive system in accordance with the present invention;
Fig. 2 is a detailed view of this embodiment, showing means for measuring a transmission ratio;
Fig. 3 shows a diagrammatic view of an embodiment of a thermal printer in accordance with the present invention.

### DETAILED DESCRIPTION OF THE INVENTION

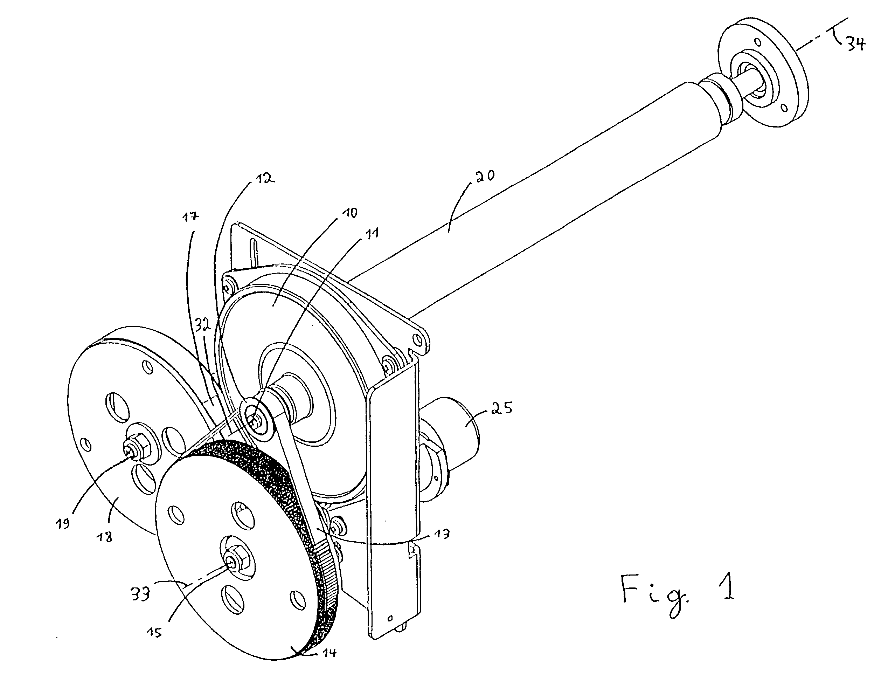

Fig. 1 shows an embodiment of a drive system wherein a motor 10 on a first shaft 11 is driving a load 20 on a second shaft 19, via an intermediate shaft 15. The axis of the motor 10 is axis 32; the axis of the intermediate shaft 15 is axis 33; the axis of the load 20 is axis 34. The first shaft 11 holds the motor 10 and a pulley 12. Preferably the motor 10 is a DC-motor. The pulley 12 is connected via a timing belt 13 to a pulley 14 on the intermediate shaft 15. The intermediate shaft also holds a rotational encoder 25 and another pulley 16, not shown. The pulley 16 is connected via a flat belt 17 to a pulley 18 on shaft 19. Shaft 19 holds load 20.

A drive system according to the present invention is not limited to the embodiment shown in Fig. 1. The drive system may have more than two transmission steps; it may e.g. have three, four or more transmission steps, which means it may have two, three or more intermediate shafts. A transmission step preferably comprises a belt, but it may comprise gears, a chain, or other mechanical components.

The motor may rotate at different speeds, dependent on the application.

The rotational encoder 25 converts the angular velocity of the intermediate shaft 15 into an electronic signal, consisting of a number of pulses per second; this electronic signal is integrated to obtain a position signal, representing the angular position of the intermediate shaft.

The position signal is fed to controlling means. This controlling means converts the position signal into a drive signal for the motor: if the angular speed of the load decreases, less pulses per second are registrated by the encoder, and the controlling means sends a drive signal to the motor to increase its speed, so that the speed of the load is kept substantially constant, in spite of load variations.

In a preferred embodiment, the controlling means comprises a proportional derivative double derivative (= PDD) controller.

In a more preferred embodiment, the intermediate shaft 15, holding the encoder 25, is coupled to the first shaft 11 holding the motor 10 via one or more transmission steps consisting of timing belts only, excluding gears, chains and flat belts.

In a still more preferred embodiment, the intermediate shaft 15 is coupled to the second shaft 19 via one transmission step consisting of a flat belt.

A still more preferred embodiment comprises means for measuring a transmission ratio between the intermediate shaft 15 and the second shaft 19.

Several advantages are associated with placing the encoder 25 on the intermediate shaft 15, instead of placing it on the shaft 19 holding the load.

A first advantage is the fact that a lower cost encoder can be used. The angular speed of the intermediate shaft is lower than the motor speed and higher than the load speed. By way of example, the angular speed of shaft 19 holding the load can be 2.8 rev/min, while the angular speed of the intermediate shaft 15 is 23 rev/min. Thus, for every revolution of the load, the intermediate shaft makes 23/2.8 = 8 revolutions. To obtain the angular position of the load with a certain accuracy, instead of using an encoder generating e.g. 24 000 pulses per revolution on the shaft 19, an encoder generating 24 000/8 = 3 000 pulses per revolution on the intermediate shaft 15 suffices. Such an encoder is much less expensive.

A second advantage of placing the encoder on the intermediate shaft 15 is concerned with system control, more particularly with resonance frequencies. We made a mathematical model, for system control theory, of the drive system, the motor and the load. Using this model, we have found that if the encoder 25 is placed on the shaft 19, holding the load, this has the drawback that all resonances of motor, drive system and load, including low frequency resonances, are included in the closed loop of the control system. This closed loop consists of the motor 10, all the elements constituting the portion of the drive system coupling the motor to the encoder 25, and the controlling means receiving the signal from the encoder and driving the motor. The presence of these resonances is disadvantageous in controlling the motor speed. On the other hand, placing the encoder on the intermediate shaft 15 keeps the low frequency resonances associated with the load 20 outside of the control loop.

A third advantage of placing the encoder on the intermediate shaft 15 is the fact that all shocks and disturbances introduced "before" the encoder, i.e. in the motor itself and between the motor and the encoder, are detected by the encoder, and thus, are passed on to the controlling means. So, it is advantageous to have only a few components between the intermediate shaft 15 and the load - without however placing the encoder on the shaft 19 holding the load, for the reason explained in the previous paragraph. Examples of the above mentioned shocks and disturbances are: misalignment of shafts or pulleys, unequal distances between the teeth of a timing belt, the engagement and the disengagement of the teeth of a timing belt with its pulleys, etc.

As mentioned hereinbefore, a preferred embodiment comprises the intermediate shaft 15 driving the load 20 on shaft 19 via one transmission step comprising a flat belt. In this way, all shocks and disturbances introduced "before" the intermediate shaft are dealt with by the controlling means driving the motor. Further, the last transmission step driving the load preferably comprises a flat belt, since a flat belt does not introduce any shocks due to the engagement or disengagement of teeth, as opposed to gears, a timing belt or a chain.

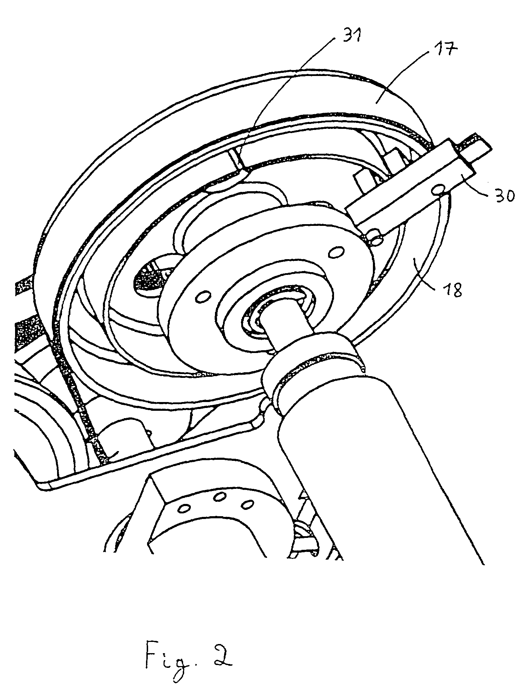

For coupling the motor 10 to the intermediate shaft 15, preferably timing belts are used, since shocks and disturbances are partly compensated for by the elasticity and the damping of the belts. Moreover, as opposed to flat belts, timing belts enforce a fixed transmission ratio, i.e. the speed of the driven belt pulley divided by the speed of the driving pulley is a fixed number (equal to the ratio of the number of teeth of both pulleys). On the contrary, the transmission ratio of a flat belt varies a little. On the one hand, a flat belt slips a little over the belt pulleys, which lowers the transmission ratio. On the other hand, the transmission ratio depends upon the position of the neutral layer of the flat belt, which varies a little with temperature, relative humidity, belt load, and which also varies from belt to belt. The neutral layer of a belt is the layer having the same length after deformation - the belt is deformed because it is bent around the pulleys - as it had before deformation; an outer layer, i.e. a layer further away from the shaft center than the neutral layer, is stretched, while an inner layer is compressed. To limit slip, belt stress can be increased. This means that bearing forces increase too, implicating a more expensive construction. Thus, timing belts are preferred to drive the intermediate shaft 15, because they have elastic and damping properties, they enforce a fixed transmission ratio, and they allow for an inexpensive construction. For the last transmission step, driving the load, a flat belt is preferred, because of its elastic and damping properties, and because it does not introduce extra shocks - especially important in the last transmission step. The variation of the transmission ratio is taken care of by means for measuring the transmission ratio between the shaft 19 and the intermediate shaft 15, as shown in Fig. 2, and described hereinafter.

The embodiments disclosed hereinbefore are preferred embodiments, but the present invention is not limited to these embodiments. The first shaft 11 may e.g. be coupled to the intermediate shaft 15 via a combination of gears, chains and belts, while elastic and non-elastic coupling elements may be used as well. The same holds for the way in which the second shaft 19 is coupled to the intermediate shaft 15.

Fig. 2 shows an embodiment for measuring the transmission ratio between the shaft 19 and the intermediate shaft 15. A slit 31 is made into a cylindrical rim of the pulley 18 that is mounted on shaft 19. When shaft 19 rotates, the slit 31 is detected by means of a fixed optical slit sensor 30, connected to the frame (not shown). Thus, sensor 30 provides one pulse for every revolution of shaft 19.

The encoder 25 on shaft 15 provides a number of pulses for every revolution of shaft 15. Out of the pulse signals of encoder 25 and sensor 30, the number of revolutions is calculated that the intermediate shaft 15 makes per revolution of shaft 19, i.e. the transmission ratio between both shafts.

The transmission ratio is fed to the controlling means, that converts the transmission signal and the position signal provided by the encoder into a drive signal for motor 10.

The embodiment disclosed hereinbefore is a preferred embodiment, but the present invention is not limited to this embodiment: the transmission ratio can e.g. also be measured by another sensor, e.g. an by encoder on shaft 19. Using an optical slit sensor is advantageous, because this sensor is inexpensive.

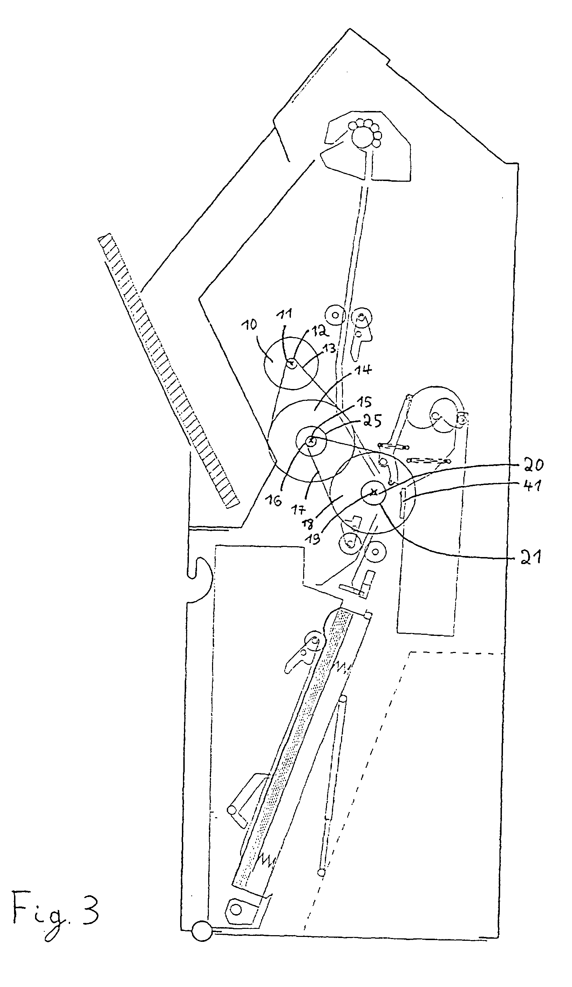

Fig. 3 shows a diagrammatic view of an embodiment of a thermal printer in accordance with the present invention. A motor 10 drives a load 20 via a drive system as described hereinbefore. Load 20 has a surface for conveying a heat-sensitive material. In fact, load 20 is a rotatable drum as is commonly used in thermal printers; a thermal head 41 is spring-biased towards the drum to firmly line-wise contact the heat-sensitive material which is passed between the head and the drum, as described hereinbefore.

Since the thermal printer shown in fig. 3 comprises the drive system described hereinbefore, it provides an improved image quality, in particular with respect to banding.

### Example

The following example illustrates the thermal printer and the drive system described hereinbefore.

| | | |
|---|---|---|
| Motor 10 | type | pancake DC-motor |
| | speed | approx. 150 rev/min |
| Pulley 12 | 30 teeth | |
| Timing belt 13 | material | a kevlar-reinforced material |
| Pulley 14 | 200 teeth | |
| Pulley 16 | diameter | 15 mm |
| Flat belt 17 | material | kevlar-reinforced polyurethane |
| Pulley 18 | diameter | 120 mm |
| Encoder 25 | rotational encoder,.3000 pulses/rev, 2 channels | |
| Load 20 | rotational drum with diameter 35 mm | |
| | speed | approx. 2.8 rev/min |

The thermal printer writes an image line approximately every 12 milliseconds; the image resolution is 320 dpi.

Having described in detail preferred embodiments of the current invention, it will now be apparent to those skilled in the art that numerous modifications can be made therein without departing from the scope of the invention as defined in the appending claims.

### Parts list

- 10: motor
- 11: shaft
- 12: pulley
- 13: timing belt
- 14: pulley
- 15: shaft
- 16: pulley
- 17: flat belt
- 18: pulley
- 19: shaft
- 20: load
- 21: surface
- 25: rotational encoder
- 30: optical slit sensor
- 31: slit
- 32: axis
- 33: axis
- 34: axis
- 41: thermal head

## Claims

1. A method controlling an angular velocity of a motor for a system comprising:
- a motor (10) for rotating at a first angular velocity, said motor (10) having a first axis (32);
- a first shaft (11) coupled to said motor;
- a load (20) for rotating at a second angular velocity, said load (20) having a second axis (34);
- a second shaft (19) coupled to said load; and
- an intermediate shaft (15) for rotating at a third angular velocity, said intermediate shaft (15) having a third axis (33) and being coupled to said first shaft (11) and being coupled to said second shaft (19), said third axis (33) of said intermediate shaft (15) being different from said first axis (32) of said motor (10), and said third axis (33) of said intermediate shaft (15) being different from said second axis (34) of said load (20);
the method comprising the steps of:
- controlling said first angular velocity of said motor (10) whereby said third angular velocity of said intermediate shaft (15) is lower than said first angular velocity of said motor (10) and higher than said second angular velocity of said load (20);
- converting the angular position of a shaft into a position signal; and
- converting said position signal into a drive signal for driving said motor at said first angular velocity;
the method **characterised in that**:
- the angular position of the intermediate shaft (15) is converted into the position signal.

2. The method according to claim 1 further comprising the step of converting said angular position into said position signal by a rotational encoder (25).

3. The method according to any one of the preceding claims, wherein said intermediate shaft (15) is coupled to said first shaft (11) by a first belt (13) and to said second shaft (19) by a second belt (17).

4. The method according to any one of the preceding claims, further comprising the step of driving said load (20) by a flat belt (17), coupled to said intermediate shaft (15).

5. The method according to any one of the preceding claims, further comprising the steps of:
- measuring a transmission ratio between said intermediate shaft and said second shaft; and
- converting said position signal and said transmission ratio into a drive signal for driving said motor at said angular velocity.

6. A system comprising:
- a drive motor (10) for rotating at a first angular velocity, said drive motor (10) having a first axis (32);
- a load (20) for rotating at a second angular velocity, said load (20) having a second axis (34); and
- a drive system for driving said load, said drive system having:
- a first shaft (11) coupled to said drive motor;
- a second shaft (19) coupled to said load; and
- an intermediate shaft (15) for rotating at a third angular velocity, said intermediate shaft (15) having a third axis (33) and being coupled to said first shaft (11) and being coupled to said second shaft (19), said third axis (33) of said intermediate shaft (15) being different from said first axis (32) of said drive motor (10), and said third axis (33) of said intermediate shaft (15) being different from said second axis (34) of said load (20);
- controlling means for controlling said first angular velocity of said drive motor (10) whereby said third angular velocity of said intermediate shaft (15) is lower than said first angular velocity of said drive motor (10) and higher than said second angular velocity of said load (20);
- converting means (25) for converting the angular position of a shaft into a position signal; and
- controlling means for receiving said position signal and for controlling said first angular velocity of said drive motor;
**characterised in that**:
- said converting means (25) is for converting the angular position of the intermediate shaft (15) into the position signal.

7. The system according to claim 6, comprising a first belt (13) for coupling said intermediate shaft (15) to said first shaft (11) and a second belt (17) for coupling said intermediate shaft (15) to said second shaft (19).

8. The system according to any one of claims 6 to 7, further comprising measuring means (30) for measuring a transmission ratio between said intermediate shaft (15) and said second shaft (19), and means for feeding said transmission ratio to said controlling means.

9. A thermal printer, comprising
- the system according to any one of claims 6 to 8, wherein said load (20) has a surface (21) for conveying a heat-sensitive material; and
- a thermal head (41) for heating said heat-sensitive material to produce an image thereon.

## Patentansprüche

1. Verfahren zur Steuerung einer Winkelgeschwindigkeit eines Motors für ein System mit Folgendem:
- einem Motor (10) zum Drehen mit einer ersten Winkelgeschwindigkeit, wobei der Motor (10) eine erste Achse (32) aufweist;
- einer an den Motor gekoppelten ersten Welle (11) ;
- einer Last (20) zum Drehen mit einer zweiten Winkelgeschwindigkeit, wobei die Last (20) eine zweite Achse (34) aufweist;
- einer an die Last gekoppelten zweiten Welle (19); und
- einer Zwischenwelle (15) zum Drehen mit einer dritten Winkelgeschwindigkeit, wobei die Zwischenwelle (15) eine dritte Achse (33) aufweist und an die erste Welle (11) und an die zweite Welle (19) gekoppelt ist, wobei sich die dritte Achse (33) der Zwischenwelle (15) von der ersten Achse (32) des Motors (10) unterscheidet und wobei sich die dritte Achse (33) der Zwischenwelle (15) von der zweiten Achse (34) der Last (20) unterscheidet;
wobei das Verfahren die folgenden Schritte umfasst:
- Steuern der ersten Winkelgeschwindigkeit des Motors (10), wobei die dritte Winkelgeschwindigkeit der Zwischenwelle (15) niedriger ist als die erste Winkelgeschwindigkeit des Motors (10) und höher ist als die zweite Winkelgeschwindigkeit der Last (20);
- Umwandeln der Winkelstellung einer Welle in ein Positionssignal; und
- Umwandeln des Positionssignals in ein Antriebssignal zum Antrieb des Motors mit der ersten Winkelgeschwindigkeit;
**dadurch gekennzeichnet, dass**
- die Winkelstellung der Zwischenwelle (15) in das Positionssignal umgewandelt wird.

2. Verfahren nach Anspruch 1, weiterhin mit dem Schritt des Umwandelns der Winkelstellung in das Positionssignal durch einen Drehgeber (25).

3. Verfahren nach einem der vorhergehenden Ansprüche, bei dem die Zwischenwelle (15) über einen ersten Riemen (13) an die erste Welle (11) und über einen zweiten Riemen (17) an die zweite Welle (19) gekoppelt ist.

4. Verfahren nach einem der vorhergehenden Ansprüche, weiterhin mit dem Schritt des Antreibens der Last (20) durch einen an die Zwischenwelle (15) gekoppelten Flachriemen (17).

5. Verfahren nach einem der vorhergehenden Ansprüche, weiterhin mit den Schritten des:
- Messens des Übersetzungsverhältnisses zwischen der Zwischenwelle und der zweiten Welle; und
- Umwandelns des Positionssignals und des Übersetzungsverhältnisses in ein Antriebssignal zum Antrieb des Motors mit der Winkelgeschwindigkeit.

6. System mit Folgendem:
- einem Antriebsmotor (10) zum Drehen mit einer ersten Winkelgeschwindigkeit, wobei der Antriebsmotor (10) eine erste Achse (32) aufweist;
- einer Last (20) zum Drehen mit einer zweiten Winkelgeschwindigkeit, wobei die Last (20) eine zweite Achse (34) aufweist; und
- einem Antriebssystem zum Antrieb der Last, wobei das Antriebssystem Folgendes aufweist:
- eine an den Antriebsmotor gekoppelte erste Welle (11);
- eine an die Last gekoppelte zweite Welle (19); und
- eine Zwischenwelle (15) zum Drehen mit einer dritten Winkelgeschwindigkeit, wobei die Zwischenwelle (15) eine dritte Achse (33) aufweist und an die erste Welle (11) sowie an die zweite Welle (19) gekoppelt ist, wobei sich die dritte Achse (33) der Zwischenwelle (15) von der ersten Achse (32) des Antriebsmotors (10) unterscheidet und wobei sich die dritte Achse (33) der Zwischenwelle (15) von der zweiten Achse (34) der Last (20) unterscheidet;
- einem Steuermittel zum Steuern der ersten Winkelgeschwindigkeit des Antriebsmotors (10), wobei die dritte Winkelgeschwindigkeit der Zwischenwelle (15) niedriger ist als die erste Winkelgeschwindigkeit des Motors (10) und höher ist als die zweite Winkelgeschwindigkeit der Last (20);
- einem Umwandelmittel (25) zum Umwandeln der Winkelstellung einer Welle in ein Positionssignal; und
- einem Steuermittel zum Empfang des Positionssignals und zum Steuern der ersten Winkelgeschwindigkeit des Antriebsmotors;
**dadurch gekennzeichnet, dass**
- das Umwandelmittel (25) zum Umwandeln der Winkelstellung der Zwischenwelle (15) in das Positionssignal bestimmt ist.

7. System nach Anspruch 6, mit einem ersten Riemen (13) zum Koppeln der Zwischenwelle (15) an die erste Welle (11) und einem zweiten Riemen (17) zum Koppeln der Zwischenwelle (15) an die zweite Welle (19).

8. System nach einem der Ansprüche 6 bis 7, weiterhin mit einem Messmittel (30) zum Messen eines Übersetzungsverhältnisses zwischen der Zwischenwelle (15) und der zweiten Welle (19) und einem Mittel zum Zuführen des Übersetzungsverhältnisses zum Steuermittel.

9. Thermodrucker, der Folgendes umfasst:
- das System gemäß einem der Ansprüche 6 bis 8, wobei die Last (20) eine Oberfläche (21) zum Befördern eines wärmeempfindlichen Materials aufweist; und
- einen Thermokopf (41) zum Erwärmen des wärmeempfindlichen Materials zur Erzeugung eines Bilds darauf.

## Revendications

1. Procédé de commande d'une vitesse angulaire d'un moteur pour un système comprenant :
- un moteur (10) destiné à tourner à une première vitesse angulaire, ledit moteur (10) ayant un premier axe (32) ;
- un premier arbre (11) accouplé audit moteur ;
- une charge (20) destinée à tourner à une deuxième vitesse angulaire, ladite charge (20) ayant un deuxième axe (34) ;
- un deuxième arbre (19) accouplé à ladite charge ; et
- un arbre intermédiaire (15) destiné à tourner à une troisième vitesse angulaire, ledit arbre intermédiaire (15) ayant un troisième axe (33) et étant accouplé audit premier arbre (11) et étant accouplé audit deuxième arbre (19), ledit troisième axe (33) dudit arbre intermédiaire (15) étant différent dudit premier axe (32) dudit moteur (10), et ledit troisième axe (33) dudit arbre intermédiaire (15) étant différent dudit deuxième axe (34) de ladite charge (20) ;
le procédé comprenant les étapes de :
- commande de ladite première vitesse angulaire dudit moteur (10) ce par quoi ladite troisième vitesse angulaire dudit arbre intermédiaire (15) est inférieure à ladite première vitesse angulaire dudit moteur (10) et supérieure à ladite deuxième vitesse angulaire de ladite charge (20) ;
- conversion de la position angulaire d'un arbre en un signal de position ; et
- conversion dudit signal de position en un signal de commande pour commander ledit moteur à ladite première vitesse angulaire ;
le procédé étant **caractérisé en ce que** :
- la position angulaire de l'arbre intermédiaire (15) est convertie en signal de position.

2. Procédé selon la revendication 1, comprenant en outre l'étape de conversion de ladite position angulaire en ledit signal de position au moyen d'un codeur rotatif (25).

3. Procédé selon l'une quelconque des revendications précédentes, dans lequel ledit arbre intermédiaire (15) est accouplé audit premier arbre (11) par une première courroie (13) et audit deuxième arbre (19) par une deuxième courroie (17).

4. Procédé selon l'une quelconque des revendications précédentes, comprenant en outre l'étape d'entraînement de ladite charge (20) par une courroie plate (17), accouplée audit arbre intermédiaire (15).

5. Procédé selon l'une quelconque des revendications précédentes, comprenant en outre les étapes de :
- mesure d'un rapport de transmission entre ledit arbre intermédiaire et ledit deuxième arbre ; et
- conversion dudit signal de position et dudit rapport de transmission en un signal de commande pour commander ledit moteur à ladite vitesse angulaire.

6. Système comprenant :
- un moteur d'entraînement (10) destiné à tourner à une première vitesse angulaire, ledit moteur (10) ayant un premier axe (32) ;
- une charge (20) destinée à tourner à une deuxième vitesse angulaire, ladite charge (20) ayant un deuxième axe (34) ; et
- un système d'entraînement pour entraîner ladite charge, ledit système d'entraînement ayant :
- un premier arbre (11) accouplé audit moteur d'entraînement ;
- un deuxième arbre (19) accouplé à ladite charge ; et
- un arbre intermédiaire (15) destiné à tourner à une troisième vitesse angulaire, ledit arbre intermédiaire (15) ayant un troisième axe (33) et étant accouplé audit premier arbre (11) et étant accouplé audit deuxième arbre (19), ledit troisième axe (33) dudit arbre intermédiaire (15) étant différent dudit premier axe (32) dudit moteur (10), et ledit troisième axe (33) dudit arbre intermédiaire (15) étant différent dudit deuxième axe (34) de ladite charge (20) ;
- un moyen de commande pour commander ladite première vitesse angulaire dudit moteur d'entraînement (10) ce par quoi ladite troisième vitesse angulaire dudit arbre intermédiaire (15) est inférieure à ladite première vitesse angulaire dudit moteur d'entraînement (10) et supérieure à ladite deuxième vitesse angulaire de ladite charge (20) ;
- un moyen de conversion (25) pour convertir la position angulaire d'un arbre en un signal de position ; et
- un moyen de commande pour recevoir ledit signal de position et pour commander ladite première vitesse angulaire dudit moteur d'entraînement ;
**caractérisé en ce que** :
- ledit moyen de conversion (25) sert à convertir la position angulaire de l'arbre intermédiaire (15) en signal de position.

7. Système selon la revendication 6, comprenant une première courroie (13) pour accoupler ledit arbre intermédiaire (15) audit premier arbre (11) et une deuxième courroie (17) pour accoupler ledit arbre intermédiaire (15) audit deuxième arbre (19).

8. Système selon l'une quelconque des revendications 6 à 7, comprenant en outre un moyen de mesure (30) pour mesurer un rapport de transmission entre ledit arbre intermédiaire (15) et ledit deuxième arbre (19), et un moyen pour alimenter ledit rapport de transmission audit moyen de commande.

9. Imprimante thermique, comprenant :
- le système selon l'une quelconque des revendications 6 à 8, dans laquelle ladite charge (20) a une surface (21) pour transporter un matériau thermo-sensible ; et
- une tête thermique (41) pour chauffer ledit matériau thermo-sensible, afin de produire une image sur celui-ci.
